# EUROPÄISCHE PATENTSCHRIFT

(11) **EP 2 969 449 B1**
(45) Veröffentlichungstag und Bekanntmachung des Hinweises auf die Patenterteilung: **15.11.2017**
(21) Anmeldenummer: 14709289.4
(22) Anmeldetag: 11.03.2014
(51) Int. Cl.: B29C 44/32, C08G 18/16

(54) **VERFAHREN ZUR HERSTELLUNG VON VERBUNDELEMENTEN SOWIE ERHALTENES VERBUNDELEMENT**
METHOD FOR PRODUCING COMPOUND ELEMENTS AND OBTAINED COMPOUND ELEMENT
PROCÉDÉ DESTINÉ À LA FABRICATION D'ÉLÉMENTS COMPOSITES ET ÉLÉMENT COMPOSITE OBTENU

(30) Priorität: 15.03.2013 EP 13159473
(43) Veröffentlichungstag der Anmeldung: 20.01.2016
(73) Patentinhaber: BASF SE, 67056 Ludwigshafen am Rhein (DE)
(72) Erfinder: JACOBMEIER, Olaf, 32312 Lübbecke (DE); KAMPF, Gunnar, 32351 Stemwede-Haldem (DE)
(74) Vertreter: BASF IP Association
(86) Internationale Anmeldenummer: PCT/EP2014/054705
(87) Internationale Veröffentlichungsnummer: WO 2014/140014

(56) Entgegenhaltungen:
- EP-A2- 0 445 837
- US-A- 5 175 228
- US-A1- 2004 069 971
- US-A1- 2011 124 756
- US-A1- 2011 175 346
- US-A1- 2012 010 313

## Beschreibung

Die vorliegende Erfindung betrifft ein Verfahren zur Herstellung von Verbundelementen umfassend mindestens eine Schicht aus Hartschaumstoff a) und mindestens eine Deckschicht b), mindestens umfassend das Bereitstellen eines fließfähigen Ausgangsmaterial a*) und das Aufbringen des fließfähigen Ausgangsmaterial a*) auf die Deckschicht b) mittels einer feststehenden Auftragsvorrichtung c) während die Deckschicht b) kontinuierlich bewegt wird. Dabei umfasst das Ausgangsmaterial a*) mindestens ein Polyisocyanat, mindestens ein Polyol, mindestens ein Treibmittel, eine Katalysatorzusammensetzung umfassend mindestens eine Verbindung D1), ausgewählt aus der Gruppe bestehend aus Metallcarboxylaten und N,N',N"-Tris(dimethylaminopropyl)-Hexahydrotriazin, und mindestens eine die Polyurethanbildung katalysierende Verbindung D2), die sich von der Verbindung D1) unterscheidet und mindestens eine Aminogruppe enthält, und gegebenenfalls Hilfsmittel und Zusatzstoffe. Dabei ist erfindungsgemäß die Polyolkomponente (Komponente B)) ausgewählt aus Polyetherolen und das Ausgangsmaterial a*) frei von Polyesterolen. Weiter betrifft die vorliegende Erfindung Verbundelemente, erhältlich nach einem derartigen Verfahren.

Polyurethan-Hartschaumstoffe sind seit langem bekannt und vielfach beschrieben. Der Einsatz der Polyurethan-Hartschaumstoffe erfolgt vorwiegend zur Wärmeisolation, beispielsweise in Kältegeräten, Transportmitteln oder Gebäuden sowie zur Herstellung von Bauelementen, insbesondere von Sandwich-Elementen.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert.

Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt. Insbesondere bei den Fassadenelementen spielt die Oberflächenstruktur der Schaumgrenze zur Deckschicht eine entscheidende Rolle. Aus verschiedensten Gründen kommt es bei der Herstellung der Sandwichelemente oftmals zu unerwünschten Lufteinschlüssen zwischen der Deckschicht und dem Schaumstoff auf Isocyanatbasis, sogenannten Lunkern. Diese Lufteinschlüsse zwischen Blech und Schaumstoff können besonders bei starken Temperaturwechseln und dunklen Farbtönen der unteren Deckschicht in der Anwendung als Fassadenelement zu Ausbeulungen des Bleches führen und die Fassade unansehnlich machen.

Weiterhin wird dadurch die Haftung zwischen Isolierschaum und Deckschicht vermindert. Oftmals ist es so, dass bei Sandwichelementen die untere Deckschicht die schlechteste Haftung, bestimmt beim Zugversuch, aufweist. Weiterhin ist bei den üblichen mittels Sandwichelementen erstellten Konstruktionen die Blechunterseite die Außenseite der Fassade, sodass sie extremen Bedingungen wie Temperatur und Sogwirkungen ausgesetzt ist und deswegen stärker belastet wird als die Oberseite des Sandwichelementes, was zur Schaumablösung vom Blech und somit ebenfalls zu Ausbeulungen führen kann.

WO 2009/077490 beschreibt ein Verfahren zur Herstellung von Verbundelementen umfassend mindestens eine Deckschicht b) und mindestens eine Schicht aus Hartschaumstoff auf Isocyanatbasis. Zwar liefert dieses Verfahren bereits Hartschaumschichten mit geringen Oberflächendefekten (Lunkern) und einer guten Oberflächenstruktur der Schaumgrenze zur angrenzenden Deckschicht. Die Oberflächenstruktur des Schaums ist jedoch verbesserungswürdig.

Es besteht daher die Aufgabe ein Verfahren zur Herstellung von Polyurethan-Hartschaumstoffen zu entwickeln, welches die Lunkerbildung an der Oberfläche der Hartschaumstoffe auf Isocyanuratbasis zur oberen Deckschicht nachhaltig minimiert oder ganz vermeidet, und somit zu Schäumen mit guter Haftung, guter Oberflächenhärtung und Oberflächenqualität führt.

Erfindungsgemäß wird diese Aufgabe gelöst durch ein Verfahren zur Herstellung von Verbundelementen umfassend mindestens eine Schicht aus Hartschaumstoff a) und mindestens eine Deckschicht b), mindestens umfassend die Schritte
(i) Bereitstellen eines fließfähigen Ausgangsmaterial a*)
(ii) Aufbringen des fließfähigen Ausgangsmaterial a*) auf die Deckschicht b) mittels einer feststehenden Auftragsvorrichtung c) während die Deckschicht b) kontinuierlich bewegt wird,
wobei das Ausgangsmaterial a*) folgende Komponenten umfasst:
A) mindestens ein Polyisocyanat,
B) mindestens ein Polyol,
C) mindestens ein Treibmittel,
D) Katalysatorzusammensetzung umfassend
   - mindestens eine Verbindung D1), ausgewählt aus der Gruppe bestehend aus Metallcarboxylaten und N,N',N"-Tris(dimethylaminopropyl)-Hexahydrotriazin;
   - mindestens eine die Polyurethanbildung katalysierende Verbindung D2), die sich von der Verbindung D1) unterscheidet und mindestens eine Aminogruppe enthält, und
E) gegebenenfalls Hilfsmittel und Zusatzstoffe,
wobei die Komponente B) ausgewählt ist aus Polyetherolen und das Ausgangsmaterial a*) frei ist von Polyesterolen.

Es wurde überraschend gefunden, dass der Einsatz von Polyolkomponenten enthaltend Polyether, die frei von Polyesterolen sind, zu einer Verbesserung der Härtung und damit verbunden zu einer besseren Oberflächenqualität führt.

Dabei wird erfindungsgemäß zur Herstellung der Verbundelemente umfassend mindestens eine Schicht aus Hartschaumstoff a) und mindestens eine Deckschicht b), zunächst gemäß Schritt (i) ein fließfähiges Ausgangsmaterial a*) bereitgestellt und anschließend gemäß Schritt (ii) das fließfähige Ausgangsmaterial a*) auf die Deckschicht b) mittels einer feststehenden Auftragsvorrichtung c) aufgebracht, während die Deckschicht b) kontinuierlich bewegt wird.

Dabei umfasst das Ausgangsmaterial a*) erfindungsgemäß folgende Komponenten:
A) mindestens ein Polyisocyanat,
B) mindestens ein Polyol,
C) mindestens ein Treibmittel,
D) Katalysatorzusammensetzung umfassend
   - mindestens eine Verbindung D1), ausgewählt aus der Gruppe bestehend aus Metallcarboxylaten und N,N',N"-Tris(dimethylaminopropyl)-Hexahydrotriazin;
   - mindestens eine die Polyurethanbildung katalysierende Verbindung D2), die sich von der Verbindung D1) unterscheidet und mindestens eine Aminogruppe enthält, und
E) gegebenenfalls Hilfsmittel und Zusatzstoffe,
wobei die Komponente B) ausgewählt ist aus Polyetherolen und das Ausgangsmaterial a*) frei ist von Polyesterolen.

Als Katalysatoren (D) zur Herstellung der Polyurethan-Hartschaumstoffe werden Verbindungen verwendet, die die Reaktion der reaktive Wasserstoffatome, insbesondere Hydroxylgruppen, enthaltenden Verbindungen der Komponente B) mit den organischen, gegebenenfalls modifizierten Polyisocyanaten A) stark beschleunigen.

Erfindungsgemäß umfasst die Katalysatorzusammensetzung D) mindestens eine Verbindung D1) und mindestens eine die Polyurethanbildung katalysierende Verbindung D2), die sich von der Verbindung D1) unterscheidet.

Die Katalysatoren können, je nach Erfordernis, allein oder in beliebigen Mischungen untereinander eingesetzt werden. Bevorzugt wird die Katalysatorkomponente D1) in einer Menge im Bereich von 0,1 bis 3,2 Gew.-Teile eingesetzt und die Katalysatorkomponente D2) in einer Menge von mindestens 0,1 Gew.-Teile, wobei die angegebene Menge (Gew.-Teile) sich jeweils auf 100 Gew.-Teile der Komponente B) bezieht.

Weiter bevorzugt wird die Katalysatorkomponente D1) in einer Menge im Bereich von 0,1 bis 2,5 Gew.-Teile eingesetzt, besonders bevorzugt in einer Menge im Bereich von 0,1 bis 1,8 Gew.-Teile und im speziellen in einer Menge im Bereich von 0,1 bis 1,0 Gew.-Teile, wobei die angegebene Menge (Gew.-Teile) sich jeweils auf 100 Gew.-Teile der Komponente B) bezieht.

Gemäß einer weiteren Ausführungsform betrifft die vorliegende Erfindung demgemäß ein Verfahren zur Herstellung von Verbundelementen wie zuvor beschrieben, wobei der Katalysator D1) in einer Menge im Bereich von 0,1 bis 2,5 Gew.-Teile, bezogen auf 100 Gew.-Teile der Komponente B), eingesetzt wird.

Im allgemeinen ist der Anteil der Katalysatorkomponente D2) größer oder gleich 0,1 Gew.-%, bevorzugt größer oder gleich 0,6 Gew.-%, besonders bevorzugt größer oder gleich 1,2 Gew.-%, insbesondere bevorzugt größer oder gleich 2,5 Gew.-%, speziell bevorzugt größer oder gleich 3,5 Gew.-% und im speziellen größer oder gleich 4,3 Gew.-% bezogen auf 100 Gew.-Teile der Komponente B).

Im allgemeinen ist der Anteil der Katalysatorkomponente D2) kleiner oder gleich 10 Gew.-%, bevorzugt kleiner oder gleich 8 Gew.-%, besonders bevorzugt kleiner oder gleich 7 Gew.-%, bezogen auf 100 Gew.-Teile der Komponente B).

Gemäß einer weiteren Ausführungsform betrifft die vorliegende Erfindung demgemäß ein Verfahren zur Herstellung von Verbundelementen wie zuvor beschrieben, wobei die Verbindung D2) in einer Menge von mindestens 0,1 Gew.-Teile, bezogen auf 100 Gew.-Teile der Komponente B), eingesetzt wird.

Im allgemeinen ist das Verhältnis der Katalysatorkomponente D2) zur Katalysatorkomponente D1) kleiner oder gleich 34, bevorzugt kleiner oder gleich 30, besonders bevorzugt kleiner oder gleich 26, insbesondere bevorzugt kleiner oder gleich 22.

Im allgemeinen ist das Verhältnis der Katalysatorkomponente D2) zur Katalysatorkomponente D1) größer oder gleich 2, bevorzugt größer oder gleich 5, besonders bevorzugt größer oder gleich 10 und im Speziellen größer 14.

Vorzugsweise ist dabei das Gewichtsverhältnis der Verbindung D2) zur Verbindung D1) größer 8.

Gemäß einer weiteren Ausführungsform betrifft die vorliegende Erfindung demgemäß ein Verfahren zur Herstellung von Verbundelementen wie zuvor beschrieben, wobei das Gewichtsverhältnis der Verbindung D2) zur Verbindung D1) größer 8 ist.

Erfindungsgemäß ist die Katalysatorkomponente D1) ausgewählt aus der Gruppe bestehend aus Metallcarboxylaten und N,N',N"-Tris(dimethylaminopropyl)-Hexahydrotriazin. Bevorzugt ist das Metallcarboxylat im Rahmen der vorliegenden Erfindung eine Alkalimetallcarboxylat oder ein Erdalkalimetallcarboxylat, besonders bevorzugt ein Kaliumcarboxylat.

Dabei ist erfindungsgemäß das Carboxylat bevorzugt ausgewählt ist aus der Gruppe bestehend aus Formiat, Ethylhexanoat und Acetat. Demgemäß sind im Rahmen der vorliegenden Erfindung geeignete Katalysatorkomponenten D1) ausgewählt aus der Gruppe bestehend aus Alkalimetallformiaten, Alkalimetall-Ethylhexanoaten, Alkalimetallacetaten, Erdalkalimetallformiaten, Erdalkalimetalloctoaten und Erdalkalimetallacetaten und N,N',N"-Tris(dimethylaminopropyl)-Hexahydrotriazin. Besonders bevorzugt ist die Katalysatorkomponente D1) ausgewählt aus der Gruppe bestehend aus Kaliumformiat, Kaliumoctoat, Kaliumacetat und N,N',N"-Tris(dimethylaminopropyl)-Hexahydrotriazin.

Vorzugsweise enthält die Katalysatorkomponente D1) eine Kombination aus Vernetzungskatalysatoren bestehend aus
d11) 0,1 bis 1,0 Gew.-Teile bezogen auf die Komponente B) eines Vernetzungskatalysators, ausgewählt aus der Gruppe bestehend aus dem Salz einer Carbonsäure, vorzugsweise eines Alkalimetall- oder Erdalkalimetall-, besonders bevorzugt Alkalimetallsalz einer Carbonsäure und
d12) 0 bis 3,0 Gew.-Teile bezogen auf die Komponente B) des Vernetzungskatalysators N,N',N"-Tris(dimethylaminopropyl)-Hexahydrotriazin.

Vorzugsweise werden als Katalysatorkomponente d11) Salze von Carbonsäuren ausgewählt aus der Gruppe bestehend aus Ameisensäure, Essigsäure und Oktansäure, besonders bevorzugt werden Ameisensäure und Essigsäure und im Speziellen Essigsäure verwendet.

Gemäß einer weiteren Ausführungsform betrifft die vorliegende Erfindung demgemäß ein Verfahren zur Herstellung von Verbundelementen wie zuvor beschrieben, wobei das Carboxylat ausgewählt ist aus der Gruppe bestehend aus Formiat, Octoat und Acetat.

Gemäß einer weiteren Ausführungsform betrifft die vorliegende Erfindung demgemäß ein Verfahren zur Herstellung von Verbundelementen wie zuvor beschrieben, wobei die Katalysatorzusammensetzung mindestens ein Kaliumcarboxylat und N,N',N"-Tris(dimethylaminopropyl)-Hexahydrotriazin enthält.

Besonders bevorzugt ist das Verhältnis von Katalysatorkomponente d12) zu Katalysatorkomponente d11) kleiner als 25, bevorzugt kleiner als 15, besonders bevorzugt kleiner als 10 und im Speziellen kleiner 7.

Im speziellen wird die Katalysatorkomponente d12) nicht verwendet, d.h. die Katalysatorkomponente D1) besteht ausschließlich aus der Katalysatorkomponente d11).

Als Katalysatorkomponente D2) geeignet sind stark basische Amine beispielsweise Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyl-diaminoethylether, Bis(2-dimethylaminoethyl)ether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin.

Weiter bevorzugt ist die Verbindung D2) ausgewählt ist aus der Gruppe bestehend aus Amidinen, tertiäre Aminen und Alkanolaminen.

Gemäß einer weiteren Ausführungsform betrifft die vorliegende Erfindung demgemäß ein Verfahren zur Herstellung von Verbundelementen wie zuvor beschrieben, wobei die Verbindung D2) ausgewählt ist aus der Gruppe bestehend aus Amidinen, tertiäre Aminen und Alkanolaminen.

Besonders bevorzugt ist die Verwendung von Triethylamin, Dimethylcyclohexylamin, Pentamethyldiethylentriamin, Bis(2-dimethylaminoethyl)ether.

Insbesondere bevorzugt werden Triethylamin und Dimethylcyclohexylamin eingesetzt, weiter bevorzugt Triethylamin.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.
Im Einzelnen seien insbesondere genannt: Alkylendiisocyanate mit 4 bis 12 Kohlenstoffatomen im Alkylenrest, wie 1,12-Dodecandiisocyanat, 2-Ethyltetramethylendüsocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'-und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unter-schiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente A besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanat-Mischungen, oder modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethylenglykole, -triole und/oder -tetrole.

Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI.

Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden. Besonders bewährt und vorzugsweise zur Anwendung kommen die folgenden Polyisocyanate: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethan-diisocyanat, Diphenylmethandiisocyanat-Isomerengemischen oder Roh-MDI und insbesondere Roh-MDI mit einem Diphenylmethandiisocyanat-Isomerengehalt von 25 bis 80 Gew.-%, vorzugsweise von 30 bis 55 Gew.-%.

### Komponente B

Erfindungsgemäß ist die Komponente B) ausgewählt ist aus Polyetherolen und das Ausgangsmaterial a*) frei ist von Polyesterolen.

Polyetherpolyole können nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit LewisSäuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt. Weiterhin können auch Multimetallcyanidverbindungen, sogenannte DMC-Katalysatoren, eingesetzt werden. Auch tertiäre Amine können als Katalysator eingesetzt werden wie z.B. Triethylamin, Tributylamin, Trimethylamin, Dimethylethanolamin, Imidazol und/oder Dimethylcyclohexylamin.

Geeignete Alkylenoxide zur Herstellung der Polyetherpolyole b1), b2) und b3) sind beispielsweise Ethylenoxid, 1,2-Propylenoxid, 1,3-Propylenoxid, 1,2- bzw. 2,3-Butylenoxid, Tetrahydrofuran, Styroloxid, vorzugsweise Ethylenoxid und 1,2-Propylenoxid. Die Alkylenoxide können einzeln, alternierend nacheinander oder als Mischungen verwendet werden.

In einer bevorzugten Ausführungsform der Erfindung wird als Komponente B) ein Gemisch aus
b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
b3) 15 bis 35 Gew.-Teilen eines oder mehrerer Polyetheralkohole mit Funktionalitäten von 1,5 bis 3 und einer Hydroxylzahl von 150 bis 450 mg KOH/g
eingesetzt.

Die gesamten Gewichtsteile b1) bis b3) der Komponente B) überschreiten definitionsgemäß nicht 100 Gewichtsteile.

Die Bestimmung der Hydroxylzahl erfolgt gemäß der DIN 53240.

Gemäß einer weiteren Ausführungsform betrifft die vorliegende Erfindung demgemäß ein Verfahren zur Herstellung von Verbundelementen wie zuvor beschrieben, wobei als Komponente B) ein Gemisch aus
b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
b3) 15 bis 35 Gew.-Teilen eines oder mehrerer Polyetheralkohole mit Funktionalitäten von 1,5 bis 3 und einer Hydroxylzahl von 150 bis 450 mg KOH/g
eingesetzt wird.

Als Startermoleküle für die erfindungsgemäß verwendeten Polyetheralkohole b1), b2) und b3) kommen folgende Verbindungen in Betracht:
b1) Es werden insbesondere hydroxylgruppenhaltige hochfunktionelle Verbindungen, insbesondere Zucker, Stärke oder Lignin als Startsubstanzen verwendet. Von besonderer praktischer Bedeutung sind hierbei Glucose, Sucrose und Sorbitol. Da diese Verbindungen bei den üblichen Reaktionsbedingungen der Alkoxylierung in fester Form vorliegen, ist es allgemein üblich, diese Verbindungen gemeinsam mit Koinitiatoren zu alkoxylieren. Als Koinitiatoren eignen sich besonders Wasser und mehrfunktionelle niedere Alkohole, z.B. Glyzerin, Trimethylolpropan, Pentaerythrit, Ethylenglykol, Diethylenglykol, Propylenglykol und deren Homologe.
b2) Als Startermoleküle werden insbesondere Ammoniak, mehrfunktionelle aliphatische Amine, insbesondere solche mit 2 bis 6 Kohlenstoffatomen und primären und sekundären Aminogruppen sowie Aminoalkohole mit 2 bis 6 Kohlenstoffatomen in der Hauptkette eingesetzt. Vorzugsweise eingesetzt werden Ethylamin, Monoalkylethylendiamine, 1,3-Propylendiamin, Diethanolamin und Triethanolamin.
b3) Als Startsubstanzen werden Wasser und/oder niedermolekulare zwei- oder dreifunktionelle Alkohole eingesetzt. Verwendet werden insbesondere lineare oder verzweigte Alkohole mit 2 bis 12 Kohlenstoffatomen, insbesondere solche mit 2 bis 6 Kohlenstoffatomen in der Hauptkette. Bevorzugt als Startsubstanzen eingesetzte Verbindungen sind neben Wasser z.B. Glycerin, Trimethylolpropan, Ethylenglykol, Propylenglykol, Diethylenglykol, Dipropylenglykol, Butandiol-1,4, Hexandiol-1,6 und deren Homologe.

Die Polyetheralkohole b1) haben bevorzugt Funktionalitäten von 3,7 bis 5,2 und eine Hydroxylzahl von 400 bis 520 mg KOH/g und besonders bevorzugt Funktionalitäten von 3,9 bis 5 und eine Hydroxylzahl von 400 bis 500 mg KOH/g und ganz besonders bevorzugt Funktionalitäten von 4 bis 4,5 und eine Hydroxylzahl von 450 bis 500 mg KOH/g.

Der Anteil der Komponente b1) beträgt bevorzugt 35 bis 75 Gew.-Teile, besonders bevorzugt 46 bis 74 Gew.-Teile und im Speziellen 57 bis 72 Gew.-Teile bezogen auf die Komponente B).

Polyetheralkohole b2) haben bevorzugt eine Funktionalität von 4,0 und eine Hydroxylzahl von 470 bis 800 mg KOH/g und besonders bevorzugt eine Funktionalität von 4 und eine Hydroxylzahl von 730-800 mg KOH/g.

Der Anteil der Komponente b2) beträgt bevorzugt 2 bis 30 Gew.-Teile, besonders bevorzugt 3 bis 22 Gew. Teile und im Speziellen 6 bis 18 Gew.-Teile bezogen auf die Komponente B).

Polyetheralkohole b3) mit Funktionalitäten von 2 bis 3 und einer Hydroxylzahl von 220 bis 430 mg KOH/g
Gemäß einer weiteren Ausführungsform betrifft die vorliegende Erfindung demgemäß ein Verfahren zur Herstellung von Verbundelementen wie zuvor beschrieben, wobei der oder die Polyetheralkohole b3) Funktionalitäten von 2 bis 3 und eine Hydroxylzahl von 220 bis 430 mg KOH/g aufweisen.

Besonders bevorzugt sind Polyetheralkohole b3) mit einer Funktionalität von 3 und einer Hydroxylzahl von 380 - 420 mg KOH/g.

Der Anteil der Komponente b3) beträgt bevorzugt 15 bis 35 Gew.-Teile, besonders bevorzugt 12,5 bis 32 Gew.-Teile und im Speziellen 10 bis 25 Gew.-Teile bezogen auf die Komponente B).

Als b3) können ein oder mehrere Polyetheralkohole eingesetzt werden. Weitere Angaben zu den verwendeten Polyetheralkoholen b1), b2) und b3) sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Die Komponente B) kann gegebenenfalls ferner Kettenverlängerungs- und/oder Vernetzungsmittel enthalten. Als Kettenverlängerungsmittel und/oder Vernetzungsmittel kommen insbesondere zwei- oder dreifunktionelle Amine und Alkohole, insbesondere Diole, Triole oder beide, jeweils mit Molekulargewichten kleiner als 400, vorzugsweise von 60 bis 300, zum Einsatz.

Als Komponente B) kommen weiterhin auch fettsäuremodifizierte Polyetheralkohole in Betracht.

Unter einem fettsäuremodifizierten Polyetherpolyol ist im Rahmen der vorliegenden Erfindung ein Umsetzungsprodukt aus mindestens einem Startermolekül mit Alkylenoxid und mindestens einer Fettsäure und/oder mindestens einem Fettsäurederivat zu verstehen. Derartige Polyole sind dem Fachmann an sich bekannt.

In einer bevorzugten Ausführungsform ist das fettsäuremodifizierte Polyetherol das Umsetzungsprodukt von
BF1) von 15 bis 63 Gew.-%, insbesondere von 20 bis 55 Gew.-%, eines oder mehrerer Polyole oder Polyamine mit einer mittleren Funktionalität von 2,5 bis 8,
BF2) von 2 bis 30 Gew.-%, insbesondere von 5 bis 25 Gew.-%, einer oder mehrerer Fettsäuren und/oder Fettsäuremonoestern,
BF3) von 35 bis 83 Gew.-%, insbesondere von 40 bis 75 Gew.-%, eines oder mehrerer Alkylenoxide mit 2 bis 4 C-Atomen,
   jeweils bezogen auf die Gewichtsmenge der Komponenten BF1) bis BF3), die 100 Gew.-% ergibt.

Vorzugsweise wird beim Einsatz von fettsäuremodifizierten Polyetherolen auf die Verwendung von Polytherolkomponente b2), besonders bevorzugt auf die Verwendung von den Komponenten b2) und b3) und im Speziellen auf die Verwendung von den Komponenten b1), b2) und b3) verzichtet.

Als Treibmittel C) für das erfindungsgemäße Verfahren können die zur Herstellung von Polyurethan-Hartschaumstoffen üblichen Treibmittel eingesetzt werden.

Als Treibmittel C) können neben Wasser noch zusätzlich allgemein bekannte chemisch und/oder physikalisch wirksame Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie 1,1,1,3,3-Pentafluoropropan (HFC245 fa), Trifluormethan, Difluormethane, 1,1,1,3,3-Pentafluorbutan (HFC 365 mfc), 1,1,1,2-Tetrafluorethan, Difluorethan und Heptafluorpropan.

Vorteilhafterweise werden als Treibmittel niedrigsiedende aliphatische Kohlenwasserstoffe, vorzugsweise n-Pentan und/oder iso-Pentan, insbesondere n-Pentan verwendet.

Das n-Pentan hat einen Siedepunkt von 36 °C, iso-Pentan einen Siedepunkt von 28 °C. Damit liegen die Siedepunkte in einem für den Treibvorgang günstigen Bereich.

Auch Wasser ist als Treibmittel alleine oder in Kombination mit einem der genannten Treibmittel geeignet.

Gemäß einer weiteren Ausführungsform betrifft die vorliegende Erfindung demgemäß ein Verfahren zur Herstellung von Verbundelementen wie zuvor beschrieben, wobei das Treibmittel ausgewählt ist aus der Gruppe bestehend aus n-Pentan, iso-Pentan und Wasser.

Da die als Treibmittel geeigneten aliphatischen Kohlenwasserstoffe brennbar und explosibel sind, müssen die Verschäumungsanlagen mit den entsprechenden Sicherheitseinrichtungen ausgestattet sein, wie sie auch beim Einsatz von n-Pentan als Treibmittel notwendig sind.

Es ist vorteilhaft, die aliphatischen Kohlenwasserstoffe gemeinsam mit Wasser als Treibmittel einzusetzen. Die eingesetzte Menge an aliphatischen Kohlenwasserstoffen beträgt 2 bis 30 Gew.-%, vorzugsweise 6 bis 19 Gew.-%, bezogen auf die Komponente B). Der Anteil des Wassers richtet sich nach der angestrebten Rohdichte des Polyurethan-Hartschaumstoffes und beträgt im allgemeinen 1 bis 5 Gew.-Teile, insbesondere 1,5 bis 5 Gew.-Teile und im ganz besonderen 2 bis 5 Gew.-Teile Wasser bezogen auf Komponente B).

Der Reaktionsmischung zur Herstellung der Polyurethan-Hartschaumstoffe können gegebenenfalls auch noch Hilfsmittel und/oder Zusatzstoffe E) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrysotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Summe der Komponenten A) und B), einverleibt, wobei jedoch der Gehalt an Matten, Vliesen und Geweben aus natürlichen und synthetischen Fasern Werte bis 80 Gew.-% erreichen kann.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphonat, Trikresylphosphat, Tris-(2-chlorethyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Daneben können auch Brom enthaltende Flammschutzmittel zum Einsatz kommen. Als Brom enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente B) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 3. Auflage, 1993 zu entnehmen.

Das Mischungsverhältnis der eingesetzten Komponenten wird über die Isocyanatkennzahl beschrieben. Unter Isocyanatkennzahl wird das Äquivalentverhältnis aus Isocyanatgruppen und gegenüber Isocyanat reaktiven Gruppen multipliziert mit 100 verstanden. So bedeutet beispielsweise eine Isocyanatkennzahl von 70, dass auf eine reaktive OH-Gruppe in Komponente B) bis E) 0,7 reaktive NCO-Gruppen in Komponente A) oder auf eine reaktive NCO-Gruppe in Komponente A) 1,43 reaktive NCO-Gruppen in den Komponenten B) bis E) vorliegen.

In einer bevorzugten Ausführungsform der Erfindung werden zur Herstellung der Polyurethan-Hartschaumstoffe die Polyisocyanate A) und die Komponente B) in solchen Mengen zur Umsetzung gebracht, dass der Isocyanatindex in einem Bereich zwischen 110 und 240, vorzugsweise zwischen 120 und 210, besonders bevorzugt zwischen 130 und 180 , spezifisch zwischen 135 und 160 und im speziellen zwischen 140 und 150 liegt. Der Isocyanatindex ist das molare Verhältnis von Isocyanatgruppen zu mit Isocyanatgruppen reaktiven Gruppen, multipliziert mit 100. Zusätzlich zur Oberflächenverbesserung, insbesondere der oberen Schaumoberfläche, werden damit auch geringere Reaktionstemperaturen und verbesserte mechanische Eigenschaften erreicht.

Gemäß einer weiteren Ausführungsform betrifft die vorliegende Erfindung demgemäß ein Verfahren zur Herstellung von Verbundelementen wie zuvor beschrieben, wobei die Komponente A) und die Komponente B) bis E) so eingesetzt werden, dass die Isocyanatkennzahl kleiner als 180 ist.

### Auftragsvorrichtung

Erfindungsgemäß erfolgt die Aufbringung mittels einer feststehenden Auftragsvorrichtung. Besonders bevorzugt wird diese feststehende Auftragsvorrichtung aus mindestens einem im Wesentlichen parallel zur Deckschicht b) und im Wesentlichen rechtwinklig zur Bewegungsrichtung der Deckschicht b) und feststehend angebrachten, mit Öffnungen f) versehenem Rohr c) gebildet.

Gemäß einer weiteren Ausführungsform betrifft die vorliegende Erfindung demgemäß ein Verfahren zur Herstellung von Verbundelementen wie zuvor beschrieben, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.
Das mindestens eine Rohr ist besonders bevorzugt parallel zur Deckschicht b) und rechtwinklig zur Bewegungsrichtung der Deckschicht b) angebracht. Das mindestens eine Rohr c) ist im Rahmen des erfindungsgemäßen Verfahrens feststehend, d. h. der Winkel zwischen der Längsachse des Rohres oder der Rohre und der Bewegungsrichtung der Deckschicht ist konstant im Wesentlichen rechtwinklig bzw. rechtwinklig. Es können ein Rohr oder bevorzugt mehrere in Längsrichtung nebeneinander angebrachte Rohre als Auftragsvorrichtung verwendet werden.

Die Auftragsvorrichtung ist aus dem Stand der Technik bekannt und wird beispielsweise in der WO 2009/077490 beschrieben, deren Inhalt hiermit vollständig in die vorliegende Erfindung einbezogen wird. Die Auftragsvorrichtung wird im Folgenden auch als Gießharke bezeichnet.

In einer bevorzugten Ausführungsform werden mindestens zwei mit Öffnungen f) versehene Rohre c) insbesondere so angeordnet, dass sie eine gerade Linie bilden. Vorzugsweise werden 2 bis 4, besonders bevorzugt 2 bis 3 und insbesondere 2 Rohre c) als Auftragsvorrichtung (Gießharke) verwendet.

Die erfindungsgemäße Gießharke besitzt, wie beschrieben, eine rohrähnliche Form, mit Löchern an der Unterseite, verteilt über die gesamte Länge, und der Zufuhr des Reaktionsgemisches entweder an einem Ende der Rohre c) oder vorzugsweise in deren Mitte sitzend. Bei Verwendung mehrerer Rohre c) wird die Zuführung vorzugsweise bei allen Rohren c) in der gleichen Weise vorgenommen.

Die Rohre c) beziehungsweise die in Längsrichtung nebeneinander angeordneten Rohre c) zusammen können eine Länge haben, die gleich der Breite der Deckschicht b) ist. Vorzugsweise ist die Länge des Rohres oder der in Längsrichtung nebeneinander angebrachten Rohre c) geringer als die Breite der Deckschicht b), um sicherzustellen, dass die Reaktionsmischung nicht teilweise neben die Deckschicht b) aufgetragen wird. Dabei ist die Gießharke mittig über der Deckschicht b) angeordnet. Vorzugsweise bedeckt die Gießharke mindestens 70 % der Breite der Deckschicht b). Bei einer Breite der Deckschicht b) von 1,2 m, wie sie bei Sandwich-Elementen üblich ist, wäre in diesem Fall auf jeder Seite eine Breite von 25 cm nicht von der Gießharke bedeckt.

Vorzugsweise bedeckt die Gießharke mindestens 70 %, besonders bevorzugt mindestens 80 %, und insbesondere mindestens 95 % der Breite der Deckschicht b).

Die Gießharke ist vorzugsweise in einer Höhe zur Deckschicht b) von 5 bis 30 cm, bevorzugt 10 bis 30 cm, und insbesondere 15 bis 25 cm, angebracht.

Die Anzahl der Öffnungen f) entlang des Rohres c) beziehungsweise entlang jeden Rohres c) beträgt je nach Länge des Rohres c) mindestens 2, bevorzugt mindestens 6, besonders bevorzugt 10 bis 50, und insbesondere 20 bis 40. Vorzugsweise ist die Anzahl der Löcher eine gerade Zahl.

Die Durchmesser der Öffnungen f) liegen im Bereich von 0,5 bis 10 mm, bevorzugt 1,0 mm bis 4 mm. Die Abstände der Öffnungen f) voneinander betragen vorzugsweise von 5 bis 200 mm, besonders bevorzugt 5 bis 60 mm, und insbesondere 10 bis 30 mm. Vorzugsweise ist der Abstand und der Durchmesser über die gesamte Länge des Rohres c) gleich.

Das Rohr c) beziehungsweise jedes Rohr hat einen Innendurchmesser von 0,2 bis 5 cm, bevorzugt von 0,3 bis 2,5 cm und insbesondere von 0,2 bis 2 cm.

In einer besonders bevorzugten Ausführungsform ist die Länge der Öffnungen f) über die Länge des Rohres c) beziehungsweise, sofern mehrere Rohre verwendet werden, der Rohre c) unterschiedlich. Unter der Länge der Öffnungen f) ist die Entfernung zu verstehen, die das Gemisch a*) vom Inneren des Rohres c) bis zum Austritt aus dem Rohr c) zurücklegen muss. Dies kann auf unterschiedliche Weise geschehen. Zum einen kann der Innendurchmesser des Rohres c) verändert werden. Dies ist nicht bevorzugt, da derartige Bauteile schwierig herzustellen und zu säubern sind.

Vorzugsweise wird die Länge der Öffnungen f) verändert, indem an der Unterseite des Rohres c) ein oder mehrere Bauteile so angebracht sind, dass die Länge der Bohrungen in der gewünschten Weise variiert. Durch diese Maßnahme wird faktisch die Wandstärke des Rohres c) geändert. Die Lochlängen, betrachtet von dem Ort der Zuführung des Ausgangsmaterials für den Hartschaumstoff auf Isocyanatbasis a*) bis zum Ende, verringern sich nicht linear, sondern exponentiell. Üblicherweise erfolgt die Verlängerung der Öffnungen f) dergestalt, dass die Länge von der Zuführung des Gemisches a*) zu den Enden des Rohres c) hin abnimmt. Das heißt, dass bei der Zuführung des Gemisches a*) in der Mitte des Rohres c) die Länge der Öffnungen f) zu den Rändern hin abnimmt. Bei der Zuführung des Gemisches a*) am Rand des Rohres c) nimmt die Länge der Öffnungen f) von der Seite, in der die Zuführung erfolgt, zur anderen Seite hin ab.

Insbesondere kann die Gießharke, die vorzugsweise aus Kunststoff besteht, aus einem einzigen Bauteil bestehen, d. h. in einem Stück hergestellt werden. Die Länge der Öffnungen variiert gemäß den vorhergehenden Ausführungen, indem an der Unterseite des Rohres die Öffnungen durch rohrförmige Verlängerungen in ihrer Länge angepasst werden.

Die Länge der Öffnungen f) ist vorzugsweise so zu wählen, dass das Verhältnis der Länge der Öffnungen f) vom Rand zur Mitte für jedes Rohr c) von 1,1 bis 10 beträgt. Besonders bevorzugt liegt das Verhältnis von 2,5 bis 10, insbesondere von 5 bis 10.

Wenn mehrere Rohre c) verwendet werden, wird die Variation der Länge der Öffnungen f) für alle Rohre c) gleich ausgestaltet. Jedes der mit Öffnungen f) versehenen Rohre c) ist mit einer Mischeinrichtung für die Mischung der Komponenten des fließfähigen Ausgangsmaterials für den Hartschaumstoff auf Isocyanatbasis a*) verbunden. Dies erfolgt üblicherweise mittels einer dazwischen liegenden Zuführung d) und e). Dies ist als Rohr ausgestaltet, im Falle der Verwendung von mehreren Rohren c) ist jedes mit der Zuführung verbunden. Dies kann durch ein Rohr geschehen, von dem wiederum Verbindungsrohre zu den Rohren c) ausgehen.

Der Durchmesser der Zuführungen d) ist vorzugsweise konstant. Er beträgt vorzugsweise 4 bis 30 mm, besonders bevorzugt 6 bis 22 mm.

Das erfindungsgemäße Verfahren wird vorzugsweise so ausgestaltet, dass die Menge des auf die Deckschicht b) aufgetragenen fließfähigen Ausgangsmaterials für den Hartschaumstoff auf Isocyanatbasis a*) von 2 kg/min bis 100 kg/min, bevorzugt von 8 kg/min bis 60 kg/min, beträgt.

Die Viskosität des fließfähigen Ausgangsmaterials für den Hartschaumstoff auf Isocyanatbasis a*) liegt vorzugsweise bei 25 °C von 100 mPa*s bis 4000 mPa*s, besonders bevorzugt von 100 mPa*s bis 3500 mPa*s, insbesondere von 200 bis 2000 mPa*s.

Gemäß einer weiteren Ausführungsform betrifft die vorliegende Erfindung demgemäß ein Verfahren gemäß einem der Ansprüche 1 bis 12, wobei die Viskosität des flüssigen Ausgangsmaterials für den Hartschaumstoff a*) bei 25 °C im Bereich von 100 mPa*s bis 3500 mPa*s liegt.

Besonders geeignet ist das erfindungsgemäße Verfahren für Schaumstoffe mit einer geringen Startzeit des Systems. Die Startzeit der für das erfindungsgemäße Verfahren eingesetzten Systeme liegt vorzugsweise unter 15s, bevorzugt unter 12s, besonders bevorzugt unter 10s und insbesondere unter 8s bei einer Abbindezeit des Systems von 20 bis 60 s. Unter Startzeit versteht man die Zeit zwischen dem Mischen der Polyol- und der Isocyanatkomponente und dem Start der Urethanreaktion. Unter der Abbindezeit wird die Zeit vom Vermischen der Ausgangskomponenten der Schaumstoffe bis zu dem Zeitpunkt verstanden, an dem das Reaktionsprodukt nicht mehr fließfähig ist. Die Abbindezeit wird je nach produzierter Elementdicke sowie Doppelbandgeschwindigkeit angepasst.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zudosiert werden.

Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.
Die Ausgangskomponenten werden bei einer Temperatur von 15 bis 90 °C, vorzugsweise von 20 bis 60 °C, insbesondere von 20 bis 45 °C, gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

Bevorzugte Schichten aus Polyurethan-Hartschaumstoff weisen eine Dichte von 0,02 bis 0,75 g/cm³, vorzugsweise von 0,025 bis 0,24 g/cm³ und insbesondere von 0,03 bis 0,1 g/cm³ auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die nach dem erfindungsgemäßen Verfahren hergestellten Hartschaumstoffe weisen gute Oberflächen mit wenigen Fehlstellen, gute Haftung, und eine gute Härtung auf. Die aus den Komponenten B) bis E) gebildete Mischung weist gleichzeitig eine gute Lagerstabilität bei 20°C bzw. 5°C über mehrere Monate auf.

Weiter betrifft die vorliegende Erfindung ein Verbundelement, erhältlich nach einem Verfahren wie zuvor beschrieben.

Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis E) der vorliegenden Erfindung und in Bezug auf die Kombination bevorzugter Komponenten A) bis E) mit bevorzugten Ausführungsformen des Auftragsverfahrens.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung von Verbundelementen umfassend mindestens eine Schicht aus Hartschaumstoff a) und mindestens eine Deckschicht b), mindestens umfassend die Schritte
   (i) Bereitstellen eines fließfähigen Ausgangsmaterial a*)
   (ii) Aufbringen des fließfähigen Ausgangsmaterial a*) auf die Deckschicht b) mittels einer feststehenden Auftragsvorrichtung c) während die Deckschicht b) kontinuierlich bewegt wird,
   wobei das Ausgangsmaterial a*) folgende Komponenten umfasst:
   A) mindestens ein Polyisocyanat,
   B) mindestens ein Polyol,
   C) mindestens ein Treibmittel,
   D) Katalysatorzusammensetzung umfassend
      - mindestens eine Verbindung D1), ausgewählt aus der Gruppe bestehend aus Metallcarboxylaten und N,N',N"-Tris(dimethylaminopropyl)-Hexahydrotriazin;
      - mindestens eine die Polyurethanbildung katalysierende Verbindung D2), die sich von der Verbindung D1) unterscheidet und mindestens eine Aminogruppe enthält, und
   E) gegebenenfalls Hilfsmittel und Zusatzstoffe,
   wobei die Komponente B) ausgewählt ist aus Polyetherolen und das Ausgangsmaterial a*) frei ist von Polyesterolen.
2. Verfahren gemäß Ausführungsform 1, wobei das Gewichtsverhältnis der Verbindung D2) zur Verbindung D1) größer 8 ist.
3. Verfahren gemäß Ausführungsform 1 oder 2, wobei der Katalysator D1) in einer Menge im Bereich von 0,1 bis 2,5 Gew.-Teile, bezogen auf 100 Gew.-Teile der Komponente B), eingesetzt wird.
4. Verfahren gemäß einer der Ausführungsformen 1 bis 3, wobei die Verbindung D2) in einer Menge von mindestens 0,1 Gew.-Teile, bezogen auf 100 Gew.-Teile der Komponente B), eingesetzt wird.
5. Verfahren gemäß einer der Ausführungsformen 1 bis 4, wobei das Carboxylat ausgewählt ist aus der Gruppe bestehend aus Formiat, Octoat und Acetat.
6. Verfahren gemäß einer der Ausführungsformen 1 bis 5, wobei die Katalysatorzusammensetzung mindestens ein Kaliumcarboxylat und N,N',N"-Tris(dimethylaminopropyl)-Hexahydrotriazin enthält.
7. Verfahren gemäß einer der Ausführungsformen 1 bis 6, wobei die Verbindung D2) ausgewählt ist aus der Gruppe bestehend aus Amidinen, tertiäre Aminen und Alkanolaminen.
8. Verfahren gemäß einer der Ausführungsformen 1 bis 7, wobei als Komponente B) ein Gemisch aus
   b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
   b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
   b3) 15 bis 35 Gew.-Teilen eines oder mehrerer Polyetheralkohole mit Funktionalitäten von 1,5 bis 3 und einer Hydroxylzahl von 150 bis 450 mg KOH/g
   eingesetzt wird.
9. Verfahren gemäß Ausführungsform 8, wobei der oder die Polyetheralkohole b3) Funktionalitäten von 2 bis 3 und eine Hydroxylzahl von 220 bis 430 mg KOH/g aufweisen.
10. Verfahren gemäß einer der Ausführungsformen 1 bis 10, wobei die Komponente A) und die Komponente B) bis E) so eingesetzt werden, dass die Isocyanatkennzahl kleiner als 180 ist.
11. Verfahren gemäß einer der Ausführungsformen 1 bis 10, wobei das Treibmittel ausgewählt ist aus der Gruppe bestehend aus n-Pentan, iso-Pentan und Wasser.
12. Verfahren gemäß einer der Ausführungsformen 1 bis11, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.
13. Verfahren gemäß einer der Ausführungsformen 1 bis 12, wobei die Viskosität des flüssigen Ausgangsmaterials für den Hartschaumstoff a*) bei 25 °C im Bereich von 100 mPa*s bis 3500 mPa*s liegt.
14. Verbundelement, erhältlich nach einem Verfahren gemäß einer der Ausführungsformen 1 bis 13.
15. Verfahren zur Herstellung von Verbundelementen umfassend mindestens eine Schicht aus Hartschaumstoff a) und mindestens eine Deckschicht b), mindestens umfassend die Schritte
   (i) Bereitstellen eines fließfähigen Ausgangsmaterial a*)
   (ii) Aufbringen des fließfähigen Ausgangsmaterial a*) auf die Deckschicht b) mittels einer feststehenden Auftragsvorrichtung c) während die Deckschicht b) kontinuierlich bewegt wird,
   wobei das Ausgangsmaterial a*) folgende Komponenten umfasst:
   A) mindestens ein Polyisocyanat,
   B) mindestens ein Polyol,
   C) mindestens ein Treibmittel,
   D) Katalysatorzusammensetzung umfassend
      - mindestens eine Verbindung D1), ausgewählt aus der Gruppe bestehend aus Metallcarboxylaten und N,N',N"-Tris(dimethylaminopropyl)-Hexahydrotriazin;
      - mindestens eine die Polyurethanbildung katalysierende Verbindung D2), die sich von der Verbindung D1) unterscheidet und mindestens eine Aminogruppe enthält, und
   E) gegebenenfalls Hilfsmittel und Zusatzstoffe,
   wobei die Komponente B) ausgewählt ist aus Polyetherolen und das Ausgangsmaterial a*) frei ist von Polyesterolen,
   wobei die Komponente A) und die Komponente B) bis E) so eingesetzt werden, dass die Isocyanatkennzahl kleiner als 180 ist.
16. Verfahren gemäß Ausführungsform 15, wobei das Gewichtsverhältnis der Verbindung D2) zur Verbindung D1) größer 8 ist.
17. Verfahren gemäß Ausführungsform 15 oder 16, wobei der Katalysator D1) in einer Menge im Bereich von 0,1 bis 2,5 Gew.-Teile, bezogen auf 100 Gew.-Teile der Komponente B), eingesetzt wird.
18. Verfahren gemäß einer der Ausführungsformen 15 bis 17, wobei die Verbindung D2) in einer Menge von mindestens 0,1 Gew.-Teile, bezogen auf 100 Gew.-Teile der Komponente B), eingesetzt wird.
19. Verfahren gemäß einer der Ausführungsformen 15 bis 18, wobei das Carboxylat ausgewählt ist aus der Gruppe bestehend aus Formiat, Octoat und Acetat.
20. Verfahren gemäß einer der Ausführungsformen 15 bis 19, wobei die Katalysatorzusammensetzung mindestens ein Kaliumcarboxylat und N,N',N"-Tris(dimethylaminopropyl)-Hexahydrotriazin enthält.
21. Verfahren gemäß einer der Ausführungsformen 15 bis 20, wobei die Verbindung D2) ausgewählt ist aus der Gruppe bestehend aus Amidinen, tertiäre Aminen und Alkanolaminen.
22. Verfahren gemäß einer der Ausführungsformen 15 bis 21, wobei als Komponente B) ein Gemisch aus
   b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
   b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
   b3) 15 bis 35 Gew.-Teilen eines oder mehrerer Polyetheralkohole mit Funktionalitäten von 1,5 bis 3 und einer Hydroxylzahl von 150 bis 450 mg KOH/g
   eingesetzt wird.
23. Verfahren gemäß Ausführungsform 22, wobei der oder die Polyetheralkohole b3) Funktionalitäten von 2 bis 3 und eine Hydroxylzahl von 220 bis 430 mg KOH/g aufweisen.
24. Verfahren gemäß einer der Ausführungsformen 15 bis 23, wobei das Treibmittel ausgewählt ist aus der Gruppe bestehend aus n-Pentan, iso-Pentan und Wasser.
25. Verfahren gemäß einer der Ausführungsformen 15 bis 24, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.
26. Verfahren gemäß einer der Ausführungsformen 15 bis 25, wobei die Viskosität des flüssigen Ausgangsmaterials für den Hartschaumstoff a*) bei 25 °C im Bereich von 100 mPa*s bis 3500 mPa*s liegt.
27. Verbundelement, erhältlich nach einem Verfahren gemäß einer der Ausführungsformen 15 bis 26.
28. Verfahren zur Herstellung von Verbundelementen umfassend mindestens eine Schicht aus Hartschaumstoff a) und mindestens eine Deckschicht b), mindestens umfassend die Schritte
   (i) Bereitstellen eines fließfähigen Ausgangsmaterial a*)
   (ii) Aufbringen des fließfähigen Ausgangsmaterial a*) auf die Deckschicht b) mittels einer feststehenden Auftragsvorrichtung c) während die Deckschicht b) kontinuierlich bewegt wird,
   wobei das Ausgangsmaterial a*) folgende Komponenten umfasst:
   A) mindestens ein Polyisocyanat,
   B) mindestens ein Polyol,
   C) mindestens ein Treibmittel,
   D) Katalysatorzusammensetzung umfassend
      - mindestens eine Verbindung D1), ausgewählt aus der Gruppe bestehend aus Metallcarboxylaten und N,N',N"-Tris(dimethylaminopropyl)-Hexahydrotriazin;
      - mindestens eine die Polyurethanbildung katalysierende Verbindung D2), die sich von der Verbindung D1) unterscheidet mindestens eine Aminogruppe enthält, und
   E) gegebenenfalls Hilfsmittel und Zusatzstoffe,
   wobei die Komponente B) ausgewählt ist aus Polyetherolen und das Ausgangsmaterial a*) frei ist von Polyesterolen.
   wobei das Gewichtsverhältnis der Verbindung D2) zur Verbindung D1) größer 8 ist.
29. Verfahren gemäß Ausführungsform 28, wobei der Katalysator D1) in einer Menge im Bereich von 0,1 bis 2,5 Gew.-Teile, bezogen auf 100 Gew.-Teile der Komponente B), eingesetzt wird.
30. Verfahren gemäß einer der Ausführungsformen 28 oder 29, wobei die Verbindung D2) in einer Menge von mindestens 0,1 Gew.-Teile, bezogen auf 100 Gew.-Teile der Komponente B), eingesetzt wird.
31. Verfahren gemäß einer der Ausführungsformen 28 bis 30, wobei das Carboxylat ausgewählt ist aus der Gruppe bestehend aus Formiat, Octoat und Acetat.
32. Verfahren gemäß einer der Ausführungsformen 28 bis 31, wobei die Katalysatorzusammensetzung mindestens ein Kaliumcarboxylat und N,N',N"-Tris(dimethylaminopropyl)-Hexahydrotriazin enthält.
33. Verfahren gemäß einer der Ausführungsformen 28 bis 32, wobei die Verbindung D2) ausgewählt ist aus der Gruppe bestehend aus Amidinen, tertiäre Aminen und Alkanolaminen.
34. Verfahren gemäß einer der Ausführungsformen 28 bis 33, wobei als Komponente B) ein Gemisch aus
   b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
   b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
   b3) 15 bis 35 Gew.-Teilen eines oder mehrerer Polyetheralkohole mit Funktionalitäten von 1,5 bis 3 und einer Hydroxylzahl von 150 bis 450 mg KOH/g
   eingesetzt wird.
35. Verfahren gemäß Ausführungsform 34, wobei der oder die Polyetheralkohole b3) Funktionalitäten von 2 bis 3 und eine Hydroxylzahl von 220 bis 430 mg KOH/g aufweisen.
36. Verfahren gemäß einer der Ausführungsformen 28 bis 35, wobei die Komponente A) und die Komponente B) bis E) so eingesetzt werden, dass die Isocyanatkennzahl kleiner als 180 ist.
37. Verfahren gemäß einer der Ausführungsformen 28 bis 36, wobei das Treibmittel ausgewählt ist aus der Gruppe bestehend aus n-Pentan, iso-Pentan und Wasser.
38. Verfahren gemäß einer der Ausführungsformen 28 bis 37, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.
39. Verfahren gemäß einer der Ausführungsformen 28 bis 38, wobei die Viskosität des flüssigen Ausgangsmaterials für den Hartschaumstoff a*) bei 25 °C im Bereich von 100 mPa*s bis 3500 mPa*s liegt.
40. Verbundelement, erhältlich nach einem Verfahren gemäß einer der Ausführungsformen 28 bis 39.

Die Erfindung soll an den nachfolgenden Beispielen näher erläutert werden.

### Beispiele

### 1. Vergleichsbeispiel 1

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 150 verschäumt.

### 1.1 Polyolkomponente:

| | |
|---|---|
| 56,7 Gew.-Teile | eines Polyetheralkohols mit einer Hydroxylzahl von 490 mgKOH/g, basierend auf Propylenoxid und Mischung aus Sucrose und Glyzerin als Starter, |
| 8,3 Gew.-Teile | eines Polyetheralkohols mit einer Hydroxylzahl von 770 mgKOH/g, basierend auf Propylenoxid und Ethylendiamin als Starter, |
| 20 Gew.-Teile | Rizinusöl |
| 12 Gew.-Teile | Tris-2-Chlorisopropylphosphat, |
| 2 Gew.-Teile | Tegostab® B8462 der Firma Goldschmidt, |
| 1,0 Gew.-Teile | Wasser |

### 1.2 Zusatzstoffe:

| | |
|---|---|
| 0,2 Gew.-Teile | Kaliumacetat in Ethylenglykol 47%ige Lösung (d.h. 0,1 Gewichtsteile des katalytisch aktiven Carboxylats) |
| 7,5 Gewichtsteile | n-Pentan |
| 3,8 Gewichtsteile | Dimethylcyclohexylamin zum Einstellen der Abbindezeiten |
| ca. 1,2 Gewichtsteile | Wasser zum Einstellen der Schaumdichte |

### 1.3 Isocyanatkomponente:

| | |
|---|---|
| 150 Gewichtsteile | Lupranat® M50 (polymeres Methylendiphenyldiisocyanat (PMDI), mit einer Viskosität von ca. 500 mPa*s bei 25 °C von BASF SE) |

### 1.4 Versuchsdurchführung

Es wurden 50 mm dicke Sandwichelemente mit 0,05 mm dicker Aluminiumfolie als Deckschichten nach dem Doppelbandverfahren hergestellt. Als Auftragsvorrichtung wurden zwei nebeneinander angeordnete, feststehende Rohre mit einer Länge von jeweils 560 mm verwendet, welche parallel zur Deckschicht in einem Abstand von 90 mm und rechtwinklig zur Bewegungsrichtung der Deckschicht angebracht und mit jeweils 14 Öffnungen versehenen waren. Die Zuführung des fließfähigen Ausgangsmaterials erfolgte in der Mitte der Rohre und die Länge der Öffnungen der Rohre nahm von der Mitte der Rohre zu deren Enden hin ab. Die Gesamtaustragsmenge des Reaktionsgemisches betrug 13,2 ± 0,5 kg/min. Die Schaumstoffrohdichte wurde dabei bei konstantem Gehalt an n-Pentan von 7,5 Gewichtsteilen durch Variation des Wassergehalts auf 36 +/- 1 g/L eingestellt. Die Abbindezeit wurde ferner auf 26 +/- 1 s durch Variation des Anteils des Dimethylcyclohexylamin eingestellt.

### 2. Beispiel 1

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 250 verschäumt.

### 2.1 Polyolkomponente:

| | |
|---|---|
| 56,7 Gew.-Teile | eines Polyetheralkohols mit einer Hydroxylzahl von 490 mgKOH/g, basierend auf Propylenoxid und Mischung aus Sucrose und Glyzerin als Starter, |
| 8,3 Gew.-Teile | eines Polyetheralkohols mit einer Hydroxylzahl von 770 mgKOH/g, basierend auf Propylenoxid und Ethylendiamin als Starter, |
| 20 Gew.-Teile | eines Polyetheralkohols mit einer Hydroxylzahl von 400 mgKOH/g, basierend auf Propylenoxid und Glyzerin als Starter, |
| 12 Gew.-Teile | Tris-2-Chlorisopropylphosphat, |
| 2 Gew.-Teile | Tegostab® B8462 der Firma Goldschmidt, |
| 1,0 Gew.-Teile | Wasser |

### 2.2 Zusatzstoffe:

| | |
|---|---|
| 0,6 Gew.-Teilen | Kaliumacetat in Ethylenglykol 47%ige Lösung (d.h. 0,3 Gewichtsteile des katalytisch aktiven Carboxylats) |
| 11 Gewichtsteile | n-Pentan |
| 4,8 Gewichtsteile | Dimethylcyclohexylamin zum Einstellen der Abbindezeiten |
| ca. 1,6 Gewichtsteile | Wasser zum Einstellen der Schaumdichte |

### 2.3 Isocyanatkomponente

| | |
|---|---|
| 250 Gewichtsteile | Lupranat® M50 (polymeres Methylendiphenyldiisocyanat (PMDI), mit einer Viskosität von ca. 500 mPa*s bei 25 °C von BASF SE) |

### 2.4 Versuchsdurchführung

Es wurden 50 mm dicke Sandwichelemente mit 0,05 mm dicker Aluminiumfolie als Deckschichten nach dem Doppelbandverfahren hergestellt. Als Auftragsvorrichtung wurden zwei nebeneinander angeordnete, feststehende Rohre mit einer Länge von jeweils 560 mm verwendet, welche parallel zur Deckschicht in einem Abstand von 90 mm und rechtwinklig zur Bewegungsrichtung der Deckschicht angebracht und mit jeweils 14 Öffnungen versehenen waren. Die Zuführung des fließfähigen Ausgangsmaterials erfolgte in der Mitte der Rohre und die Länge der Öffnungen der Rohre nahm von der Mitte der Rohre zu deren Enden hin ab. Die Gesamtaustragsmenge des Reaktionsgemisches betrug 13,2 ± 0,5 kg/min. Die Schaumstoffrohdichte wurde dabei bei konstantem Gehalt an n-Pentan von 11 Gewichtsteilen durch Variation des Wassergehalts auf 36 +/- 1 g/L eingestellt. Die Abbindezeit wurde ferner auf 26 +/- 1 s durch Variation des Anteils des Dimethylcyclohexylamin eingestellt.

### 3. Vergleichsbeispiel 2

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 250 verschäumt.

### 3.1 Polyolkomponente:

| | |
|---|---|
| 56,7 Gew.-Teile | eines Polyetheralkohols mit einer Hydroxylzahl von 490 mgKOH/g, basierend auf Propylenoxid und Mischung aus Sucrose und Glyzerin als Starter, |
| 8,3 Gew.-Teile | eines Polyetheralkohols mit einer Hydroxylzahl von 770 mgKOH/g, basierend auf Propylenoxid und Ethylendiamin als Starter, |
| 20 Gew.-Teile | eines Polyetheralkohols mit einer Hydroxylzahl von 400 mgKOH/g, basierend auf Propylenoxid und Glyzerin als Starter, |
| 12 Gew.-Teile | Tris-2-Chlorisopropylphosphat, |
| 2 Gew.-Teile | Tegostab® B8462 der Firma Goldschmidt, |
| 1,0 Gew.-Teile | Wasser |

### 3.2 Zusatzstoffe:

| | |
|---|---|
| 0,6 Gew.-Teilen | Kaliumacetat in Ethylenglykol 47%ige Lösung (d.h. 0,3 Gewichtsteile des katalytisch aktiven Carboxylats) |
| 11 Gewichtsteile | n-Pentan |
| 4,8 Gewichtsteile | Dimethylcyclohexylamin zum Einstellen der Abbindezeiten |
| ca. 1,6 Gewichtsteile | Wasser zum Einstellen der Schaumdichte |

### 3.3 Isocyanatkomponente:

| | |
|---|---|
| 250 Gewichtsteile | Lupranat® M50 (polymeres Methylendiphenyldiisocyanat (PMDI), mit einer Viskosität von ca. 500 mPa*s bei 25 °C von BASF SE) |

### 3.4 Versuchsdurchführung

Es wurden 50 mm dicke Sandwichelemente mit 0,05 mm dicker Aluminiumfolie als Deckschichten nach dem Doppelbandverfahren hergestellt. Die Schaumstoffrohdichte wurde dabei bei konstantem Gehalt an n-Pentan von 11 Gewichtsteilen durch Variation des Wassergehalts auf 36 +/- 1 g/L eingestellt. Die Abbindezeit wurde ferner auf 26 +/- 1 s durch Variation des Anteils des Dimethylcyclohexylamin eingestellt.

Als Auftragsvorrichtung wurde ein Rohr (Gießharke) der Länge 25 cm und mit Innendurchmesser 10 mm verwendet, welches parallel zur Deckschicht und in Bandlaufrichtung angebracht und mit 41 Öffnungen mit dem Durchmesser 1,2 mm versehenen war. Länge und Durchmesser der Öffnungen waren über die Rohrlänge konstant. Der Abstand der ersten Öffnung bis zur letzten Öffnung betrug 20 cm. Die Zuführung des flüssigen Reaktionsgemisches erfolgte an einem Ende des Rohres. Die zugeführte Menge betrug 13,2 kg/min +/- 0,5 kg/min. Die Gießharke oszillierte während des Auftragens des flüssigen Reaktionsgemisches über die Elementbreite des herzustellenden Sandwichelements.

### 4. Ergebnisse

Die Häufigkeit von Oberflächendefekten an der Produktionsoberseite wurde durch eine optische Methode quantitativ bestimmt. Dafür wurde in einem Abstand von einem Millimeter zur oberen Deckschicht (Produktionsoberseite), eine Ebene in eine Schaumprobe gelegt und überstehendes Material abgetrennt.

Bei der quantitativen Beurteilung der Oberfläche wurde die Oberfläche des Schaums von rechts und danach von links beleuchtet und jeweils fotografiert. Die Bilder wurden überlagert und mit einer Bildanalyse-Software analysiert. Die Fehlstellen an der Oberfläche erscheinen dabei als schwarze Flächen. Der Prozentsatz der schwarzen Flächen an der gesamten Oberfläche ist ein Maß für die Häufigkeit von Oberflächendefekten des Schaums.

Des Weiteren erfolgte eine zusätzliche qualitative Beurteilung der Oberflächenbeschaffenheit der Schäume, wobei die Deckschicht von einer 1m×2m großen Schaumprobe entfernt wurde und die Oberfläche visuell beurteilt und klassifiziert wurde.

Die Ergebnisse sind in Tabelle 1 dargestellt.

**Tabelle 1**

| | | Vergleichsbeispiel 1 | Beispiel 1 | Vergleichsbeispiel 2 |
|---|---|---|---|---|
| Oberfläche der Produktionsoberseite qualitativ | | Schlecht / verbesserungswürdig | Sehr gut | Schlecht/verbes serungswürdig |
| Oberfläche der Produktionsoberseite quantitativ | % | 4,7 | 0,9 | 3,8 |
| Stehende Auftragsvorrichtung | | ja | ja | nein |
| Kaliumacetat | Gew.-Teile | 0,235 | 0,282 | 0,282 |
| Mischungsverhältnis 100: | | 150 | 250 | 250 |

Die Ergebnisse in der Tabelle 1 zeigen, dass die Häufigkeit der Ausbildung von Oberflächendefekten der Produktionsoberseite an der Grenzfläche zur metallischen Deckschicht im erfindungsgemäßen Beispiel deutlich verringert wurde. Bei ansonsten identischer Versuchsdurchführung des Beispiels 1 jedoch unter Verwendung einer nicht-stehenden Auftragsvorrichtung ist die Oberfläche signifikant verschlechtert.

## Patentansprüche

1. Verfahren zur Herstellung von Verbundelementen umfassend mindestens eine Schicht aus Hartschaumstoff a) und mindestens eine Deckschicht b), mindestens umfassend die Schritte
(i) Bereitstellen eines fließfähigen Ausgangsmaterial a*)
(ii) Aufbringen des fließfähigen Ausgangsmaterial a*) auf die Deckschicht b) mittels einer feststehenden Auftragsvorrichtung c) während die Deckschicht b) kontinuierlich bewegt wird,
wobei das Ausgangsmaterial a*) folgende Komponenten umfasst:
A) mindestens ein Polyisocyanat,
B) mindestens ein Polyol,
C) mindestens ein Treibmittel,
D) Katalysatorzusammensetzung umfassend
- mindestens eine Verbindung D1), ausgewählt aus der Gruppe bestehend aus Metallcarboxylaten und N,N',N"-Tris(dimethylaminopropyl)-Hexahydrotriazin;
- mindestens eine die Polyurethanbildung katalysierende Verbindung D2), die sich von der Verbindung D1) unterscheidet und mindestens eine Aminogruppe enthält, und
E) gegebenenfalls Hilfsmittel und Zusatzstoffe,
**dadurch gekennzeichnet, dass** die Komponente B) ausgewählt ist aus Polyetherolen und das Ausgangsmaterial a*) frei ist von Polyesterolen.

2. Verfahren gemäß Anspruch 1, wobei das Gewichtsverhältnis der Verbindung D2) zur Verbindung D1) größer 8 ist.

3. Verfahren gemäß Anspruch 1 oder 2, wobei der Katalysator D1) in einer Menge im Bereich von 0,1 bis 2,5 Gew.-Teile, bezogen auf 100 Gew.-Teile der Komponente B), eingesetzt wird.

4. Verfahren gemäß einem der Ansprüche 1 bis 3, wobei die Verbindung D2) in einer Menge von mindestens 0,1 Gew.-Teile, bezogen auf 100 Gew.-Teile der Komponente B), eingesetzt wird.

5. Verfahren gemäß einem der Ansprüche 1 bis 4, wobei das Carboxylat ausgewählt ist aus der Gruppe bestehend aus Formiat, Ethylhexanoat und Acetat.

6. Verfahren gemäß einem der Ansprüche 1 bis 5, wobei die Katalysatorzusammensetzung mindestens ein Kaliumcarboxylat und N,N',N"-Tris(dimethylaminopropyl)-Hexahydrotriazin enthält.

7. Verfahren gemäß einem der Ansprüche 1 bis 6, wobei die Verbindung D2) ausgewählt ist aus der Gruppe bestehend aus Amidinen, tertiäre Aminen und Alkanolaminen.

8. Verfahren gemäß einem der Ansprüche 1 bis 7, wobei als Komponente B) ein Gemisch aus
b1) 35 bis 75 Gew.-Teilen eines oder mehrerer hochfunktioneller Polyetheralkohole mit Funktionalitäten von 3,5 bis 5,5 und einer Hydroxylzahl von 400 bis 550 mg KOH/g,
b2) 2 bis 30 Gew.-Teilen eines oder mehrerer Polyetheralkohole auf Basis aliphatischer Amine mit Funktionalitäten von 3,5 bis 4,5 und einer Hydroxylzahl von 450 bis 900 mg KOH/g,
b3) 15 bis 35 Gew.-Teilen eines oder mehrerer Polyetheralkohole mit Funktionalitäten von 1,5 bis 3 und einer Hydroxylzahl von 150 bis 450 mg KOH/g eingesetzt wird.

9. Verfahren gemäß Anspruch 8, wobei der oder die Polyetheralkohole b3) Funktionalitäten von 2 bis 3 und eine Hydroxylzahl von 220 bis 430 mg KOH/g aufweisen.

10. Verfahren gemäß einem der Ansprüche 1 bis 9, wobei die Komponente A) und die Komponente B) bis E) so eingesetzt werden, dass die Isocyanatkennzahl kleiner als 180 ist.

11. Verfahren gemäß einem der Ansprüche 1 bis 10, wobei das Treibmittel ausgewählt ist aus der Gruppe bestehend aus n-Pentan, iso-Pentan und Wasser.

12. Verfahren gemäß einem der Ansprüche 1 bis11, wobei die feststehende Auftragsvorrichtung c) aus mindestens einem parallel zur Deckschicht b) und rechtwinklig zur Bewegungsrichtung der Deckschicht b) angebrachten, mit Öffnungen f) versehenen, feststehenden Rohr c) besteht.

13. Verfahren gemäß einem der Ansprüche 1 bis 12, wobei die Viskosität des flüssigen Ausgangsmaterials für den Hartschaumstoff a*) bei 25 °C im Bereich von 100 mPa*s bis 3500 mPa*s liegt.

14. Verbundelement, erhältlich nach einem Verfahren gemäß einem der Ansprüche 1 bis 13.

## Claims

1. A process for producing composite elements comprising at least one rigid foam layer a) and at least one outer layer b), at least comprising the following steps:
(i) providing a flowable starting material a*)
(ii) applying the flowable starting material a*) to the outer layer b) by means of a fixed application apparatus c) while the outer layer b) is moved continuously,
where the starting material a*) comprises the following components:
A) at least one polyisocyanate,
B) at least one polyol,
C) at least one blowing agent,
D) catalyst composition comprising
- at least one compound D1) selected from the group consisting of metal carboxylates and N,N',N"-tris(dimethylaminopropyl)hexahydrotriazine;
- at least one compound D2) which catalyzes polyurethane formation and which differs from the compound D1) and comprises at least one amino group, and
E) optionally auxiliaries and additives,
wherein component B) is one selected from polyetherols, and the starting material a*) is free from polyesterols.

2. The process according to claim 1, where the ratio by weight of the compound D2) to the compound D1) is greater than 8.

3. The process according to claim 1 or 2, where the amount used of the catalyst D1) is in the range from 0.1 to 2.5 parts by weight, based on 100 parts by weight of component B).

4. The process according to any of claims 1 to 3, where the amount used of the compound D2) is at least 0.1 part by weight, based on 100 parts by weight of component B).

5. The process according to any of claims 1 to 4, where the carboxylate is one selected from the group consisting of formate, ethylhexanoate, and acetate.

6. The process according to any of claims 1 to 5, where the catalyst composition comprises at least one potassium carboxylate and N,N',N " - tris(dimethylaminopropyl)hexahydrotriazine.

7. The process according to any of claims 1 to 6, where the compound D2) is one selected from the group consisting of amidines, tertiary amines, and alkanolamines.

8. The process according to any of claims 1 to 7, where a mixture of
b1) from 35 to 75 parts by weight of one or more high-functionality polyether alcohols with functionalities of from 3.5 to 5.5 and with a hydroxy number of from 400 to 550 mg KOH/g,
b2) from 2 to 30 parts by weight of one or more polyether alcohols based on aliphatic amines with functionalities of from 3.5 to 4.5 and with a hydroxy number of from 450 to 900 mg KOH/g, and
b3) from 15 to 35 parts by weight of one or more polyether alcohols with functionalities of from 1.5 to 3 and with a hydroxy number of from 150 to 450 mg KOH/g
is used as component B).

9. The process according to claim 8, where the polyether alcohol(s) b3) has/have functionality/functionalities of from 2 to 3 and a hydroxy number of from 220 to 430 mg KOH/g.

10. The process according to any of claims 1 to 9, where component A) and component B) to E) are used in such a way that the isocyanate index is smaller than 180.

11. The process according to any of claims 1 to 10, where the blowing agent is one selected from the group consisting of n-pentane, isopentane, and water.

12. The process according to any of claims 1 to 11, where the fixed application apparatus c) is composed of at least one fixed tube c) provided with apertures f) and attached parallel to the outer layer b) and at right angles to the direction of movement of the outer layer b).

13. The process according to any of claims 1 to 12, where the viscosity at 25°C of the liquid starting material for the rigid foam a*) is in the range from 100 mPa*s to 3500 mPa*s.

14. A composite element obtainable by a process according to any of claims 1 to 13.

## Revendications

1. Procédé de fabrication d'éléments composites comprenant au moins une couche en une mousse dure a) et au moins une couche de recouvrement b), comprenant au moins les étapes suivantes :
(i) la préparation d'un matériau de départ fluide a*),
(ii) l'application du matériau de départ fluide a*) sur la couche de recouvrement b) au moyen d'un dispositif d'application fixe c) pendant que la couche de recouvrement b) est déplacée en continu,
le matériau de départ a*) comprenant les composants suivantes :
A) au moins un polyisocyanate,
B) au moins un polyol,
C) au moins un agent gonflant,
D) une composition catalytique comprenant :
- au moins un composé D1), choisi dans le groupe constitué par les carboxylates de métaux et la N,N',N " - tris(diméthylaminopropyl)-hexahydrotriazine ;
- au moins un composé D2) catalysant la formation de polyuréthane, qui est différent du composé D1) et contient au moins un groupe amino, et
E) éventuellement des adjuvants et additifs, **caractérisé en ce que** le composant B) est choisi parmi les polyétherols et le matériau de départ a*) est exempt de polyestérols.

2. Procédé selon la revendication 1, dans lequel le rapport en poids entre le composé D2) et le composé D1) est supérieur à 8.

3. Procédé selon la revendication 1 ou 2, dans lequel le catalyseur D1) est utilisé en une quantité dans la plage allant de 0,1 à 2,5 parties en poids, par rapport à 100 parties en poids du composant B).

4. Procédé selon l'une quelconque des revendications 1 à 3, dans lequel le composé D2) est utilisé en une quantité d'au moins 0,1 partie en poids, par rapport à 100 parties en poids du composant B).

5. Procédé selon l'une quelconque des revendications 1 à 4, dans lequel le carboxylate est choisi dans le groupe constitué par le formiate, l'éthylhexanoate et l'acétate.

6. Procédé selon l'une quelconque des revendications 1 à 5, dans lequel la composition catalytique contient au moins un carboxylate de potassium et de la N,N',N " - tris(diméthylaminopropyl)-hexahydrotriazine.

7. Procédé selon l'une quelconque des revendications 1 à 6, dans lequel le composé D2) est choisi dans le groupe constitué par les amidines, les amines tertiaires et les alcanolamines.

8. Procédé selon l'une quelconque des revendications 1 à 7, dans lequel un mélange de
b1) 35 à 75 parties en poids d'un ou de plusieurs polyéther-alcools hautement fonctionnels ayant des fonctionnalités de 3,5 à 5,5 et un indice hydroxyle de 400 à 550 mg KOH/g,
b2) 2 à 30 parties en poids d'un ou de plusieurs polyéther-alcools à base d'amines aliphatiques ayant des fonctionnalités de 3,5 à 4,5 et un indice hydroxyle de 450 à 900 mg KOH/g,
b3) 15 à 35 parties en poids d'un ou de plusieurs polyéther-alcools ayant des fonctionnalités de 1,5 à 3 et un indice hydroxyle de 150 à 450 mg KOH/g,
est utilisé en tant que composant B).

9. Procédé selon la revendication 8, dans lequel le ou les polyéther-alcools b3) présentent des fonctionnalités de 2 à 3 et un indice hydroxyle de 220 à 430 mg KOH/g.

10. Procédé selon l'une quelconque des revendications 1 à 9, dans lequel le composant A) et les composants B) à E) sont utilisés de sorte que l'indice d'isocyanate soit inférieur à 180.

11. Procédé selon l'une quelconque des revendications 1 à 10, dans lequel l'agent gonflant est choisi dans le groupe constitué par le n-pentane, l'iso-pentane et l'eau.

12. Procédé selon l'une quelconque des revendications 1 à 11, dans lequel le dispositif d'application fixe c) est constitué d'au moins un tube c) fixe muni d'ouvertures f), disposé parallèlement à la couche de recouvrement b) et perpendiculairement à la direction de déplacement de la couche de recouvrement b).

13. Procédé selon l'une quelconque des revendications 1 à 12, dans lequel la viscosité du matériau de départ liquide pour la mousse dure a*) à 25 °C se situe dans la plage allant de 100 mPa*s à 3 500 mPa*s.

14. Élément composite, pouvant être obtenu par un procédé selon l'une quelconque des revendications 1 à 13.
